# EUROPEAN PATENT SPECIFICATION

(11) **EP 3 355 001 B1**
(45) Date of publication and mention of the grant of the patent: **11.09.2019**
(21) Application number: 17153661.8
(22) Date of filing: 30.01.2017
(51) Int. Cl.: F25B 15/00, F25B 17/00, F25B 49/04

(54) **SYSTEM AND METHOD FOR CONTROLLING ABSORPTION REFRIGERATOR COOLING TO ACCOUNT FOR AC MAINS VARIATION**
SYSTEM UND VERFAHREN ZUM STEUERN EINER ABSORPTIONSKÄLTEKÜHLUNG ZUR BERÜCKSICHTIGUNG EINER WECHSELSTROMSCHWANKUNG
SYSTÈME ET PROCÉDÉ DE CONTRÔLE DE LA RÉFRIGÉRATION À ABSORPTION POUR TENIR COMPTE DE LA FLUCTUATION DU COURANT ALTERNATIF

(43) Date of publication of application: 01.08.2018
(73) Proprietor: Thetford BV, 4870 AD Etten-Leur (NL)
(72) Inventor: Berkhout, Pieter-Dirk, 3317 EA Dordrecht (NL); Mennen, Roy, 6088 PA Roggel (NL)
(74) Representative: Dietz, Christopher Friedrich

(56) References cited:
- EP-A1- 1 001 231
- EP-A1- 2 562 500
- EP-A2- 2 447 630
- US-A- 5 355 693
- US-A- 6 148 629
- US-A1- 2008 060 366

## Description

### FIELD

The present disclosure relates generally to cooling systems, and more particularly to systems and methods for controlling an absorption cooling unit of an absorption refrigerator in a manner that eliminates performance shortcomings caused by fluctuations in an AC mains signal which is powering an electric heater associated with the absorption cooling unit.

### BACKGROUND

This section merely provides background information related to the present disclosure and may not constitute prior art.

Vehicles, including but not limited to, recreational vehicles ("RVs", in the United States and "Caravans" or "Mobile Homes" in Europe), tractor trailers, airplanes, boats, trains and the like, often incorporate refrigerators for the comfort and convenience of the occupants. For example, recreational vehicle campers often find it convenient, or even necessary, to refrigerate food, drinks and medicine during their journey and while at their campsites. While many prepared campsites in parks and commercial campgrounds provide for AC electrical power outlets, many do not. Moreover, many highly desirable camping locations exist outside of those prepared campsites that provide AC power hookup provisions. Thus, a popular solution has been to equip the recreational vehicle with an absorption refrigerator.

Document US 5355693A discloses an absorption refrigerator according to the preamble of claim 1.

Absorption refrigerators typically employ heat to vaporize a coolant-water mixture, typically ammonia-water, thereby driving the refrigeration loop in a manner well known to those skilled in the art. Popular heat sources include electrical heaters and fuel burners. The fuel burners typically employ propane which is readily available at camping supply stores, barbeque supply stores and gas stations. However, any liquid or gaseous fuel source could be expected to work well, and can be controlled through simple, automated control systems.

Some absorption refrigerators incorporate temperature regulation control. Typically, a temperature within the refrigerator is monitored. The cooling system can be activated when a cut-in temperature is reached and de-activated when a cut-out temperature is reached. Some refrigerators may also incorporate passive defrost regulation that turns off the cooling system when an internal temperature reaches a predetermined low temperature threshold and turns on the cooling system when an internal temperature reaches a predetermined high temperature threshold.

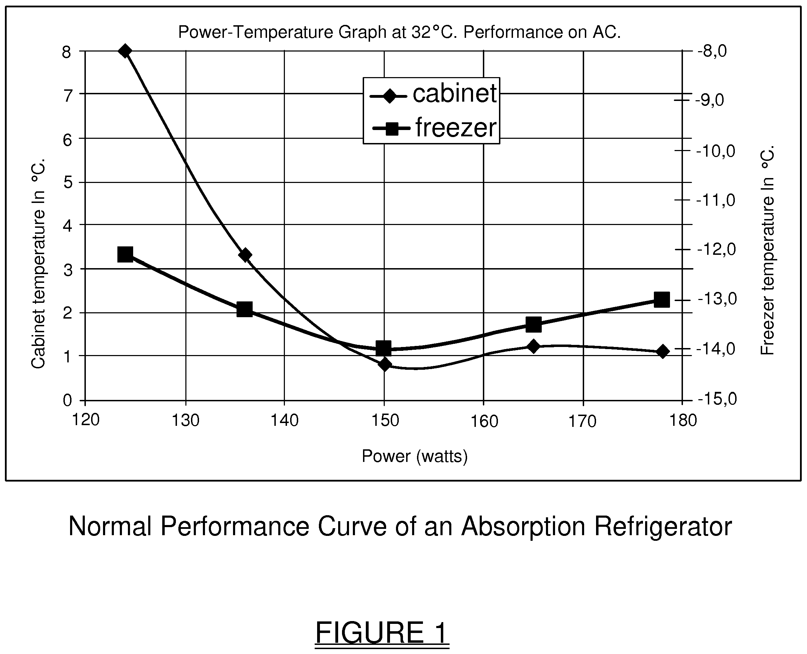

Gas absorption refrigerators may also be driven by DC or AC power. State of the art absorption refrigerators can operate on any of gas (e.g. propane, butane or a mixture thereof), DC power or AC power. The absorption cooling unit of the refrigerator removes heat from the refrigerator compartments and operates at its maximum cooling performance with a certain amount of heat input to the absorption cooling unit. If operated below or above that optimal point, the cooling performance is reduced to a certain extent. For example, in Figure 1 it can be seen how significantly cabinet temperature can be affected by a drop of just 20 watts in power, such as from 150 watts to 130 watts. Thus, even a small drop in power delivered to the heater can have a noticeable effect on the cooling performance.

Manufacturers of RV absorption refrigerators typically take into consideration what the nominal AC mains voltage is in the geographic market (e.g., Europe, United States, etc.) that the refrigerator will be sold in and used in. This is in part because the output of the AC heating element used in the absorption refrigerator is selected to match the optimal working point of the unit. Usually the nominal wattage of the heating element is chosen to be in proximity to the maximum cooling performance at the nominal AC mains voltage. The nominal mains voltage, per standard, in Europe is defined as 230VAC +/- 10% at 50Hz. In turn, this tolerance can lead to non-optimal cooling performance below and above the nominal AC voltage. However, it is quite common in Europe to find locations which do not comply with the standard and which deliver an AC mains voltage which is below or above the standard +/- 10% tolerance range. This can degrade the cooling performance of an absorption cooling refrigerator even further.

Accordingly, there exists a need to overcome the performance loss in an absorption refrigerator when it is powered by an AC mains signal that varies excessively from the nominal voltage rating of the signal.

### SUMMARY

In one aspect the present disclosure relates to an absorption refrigerator having an alternating current (AC) powered heater for providing heat to an absorption cooling unit. The absorption refrigerator is characterized by a heater power control electronics subsystem including a voltage measurement subsystem, and an electronic controller. The voltage measurement subsystem is configured to measure a magnitude of an AC mains voltage being used to power the absorption refrigerator and to detect when the AC mains voltage varies from a nominal voltage rating. The electronic controller is in communication with the heater power control electronics subsystem and is configured to use a measured value of the AC mains voltage to determine a pulse width modulated (PWM) duty cycle value needed for powering the heater when the AC mains voltage varies from the nominal voltage rating. The electronic controller also helps to control the generation of a PWM AC drive signal to the heater which has a power level that takes into account the variation from the nominal mains voltage.

In another aspect the present disclosure relates to a method for controlling power provided to an alternating current (AC) powered heater of an absorption cooling unit of an absorption refrigerator. The absorption refrigerator is powered by an AC mains power source providing an actual AC voltage output which varies from a nominal AC voltage of the AC mains power source. The method is characterized by operations that involve measuring the actual voltage output of the AC mains power source, and determining a duty cycle for a pulse width modulated (PWM) AC drive signal needed to be applied to the heater to provide a predetermined power output to the heater that takes into account a variation of the actual AC voltage output from the nominal AC voltage of the AC mains power source. The method also is characterized by the use of a controller which controls a heater power control electronics subsystem in accordance with the determined duty cycle, to generate the PWM AC drive signal to the heater.

### DRAWINGS

The present teachings will become more fully understood from the detailed description, any appended claims and the following drawings. The drawings are for illustrative purposes only and are not intended to limit the scope of the present disclosure.
Figure 1 shows a pair of graphs illustrating the effect of a drop in AC power input on the cooling performance of a refrigerator cabinet portion and a freezer portion of a typical absorption refrigerator;
Figure 2 is a high level block diagram of an absorption refrigerator in accordance with one embodiment of the present disclosure;
Figure 3 is a detailed block diagram of the heater power control electronics subsystem shown in Figure 2 and its connections to various other components and subsystems of the absorption refrigerator;
Figure 4 is a chart which may form a look-up table for the electronic controller of Figure 2 for determining an appropriate duty cycle for the PWM control signal based on the measured AC mains input voltage;
Figure 5 is a simplified circuit diagram illustrating a triac being used as the control component for producing an AC output signal for the high output heater, along with waveforms indicating the PWM control signal and the AC output signal to illustrate how the duty cycle of the AC output signal tracks the duty cycle of the PWM control signal; and
Figure 6 is a simplified circuit diagram illustrating a MOSFET being used as the control component for producing the AC output signal for the high output heater, along waveforms indicating the PWM control signal, the signal applied to the gate of the MOSFET and the AC output signal applied to the high output heater.

Corresponding reference numerals indicate corresponding parts throughout the several views of the drawings.

### DETAILED DESCRIPTION

The following description is merely exemplary in nature and is not intended to limit the present disclosure, its application, or uses. It should be understood that throughout the drawings, corresponding reference numerals indicate like or corresponding parts and features.

The devices, methods and systems described herein can be applied to a wide variety of cooling units. For the purpose of illustration though, a typical absorption refrigeration system is used that has a cold storage compartment. Those skilled in the art will understand that the illustrative refrigeration system does not limit the present teachings in any way, but is used only to explain the present teachings.

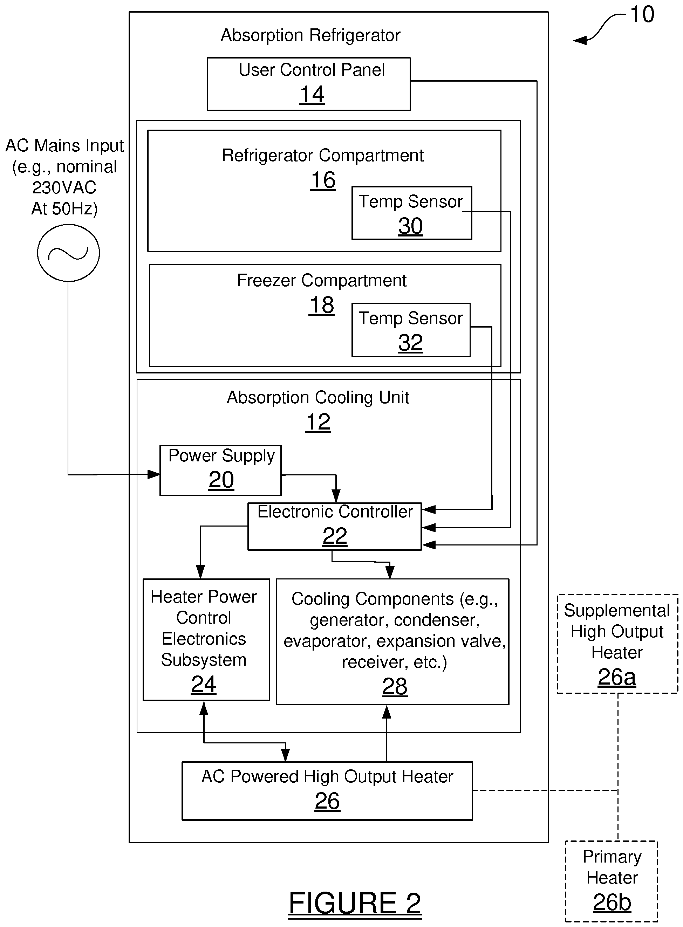

With initial reference to FIG. 2, one example of an absorption refrigerator 10 is shown incorporating an absorption cooling unit 12 in accordance with one embodiment of the present disclosure. The absorption refrigerator may include a user control panel 14, a refrigerator compartment 16 that can be maintained within a first desired temperature range and a freezer compartment 18 that can be maintained within a second desired temperature range which is lower than the first desired temperature range. The two temperature ranges may be adjusted using controls on the user control panel 14.

The absorption cooling unit in this example is shown being powered by a nominal 230VAC mains voltage having a line frequency of 50Hz. It will be appreciated that the nominal AC mains voltage and line frequency will vary in different parts of the world. For example, while the nominal AC mains voltage in the United States is 120V with a frequency is 60Hz, throughout Europe it is 230V at 50Hz (+/- 10%). In China it is 220VAC at 50Hz.

The absorption refrigerator may also be provided with the option of being powered by a DC voltage or from a combustible gas (butane, propane, etc.), although for the present discussion it will be assumed that the absorption refrigerator 10 is being powered by the nominal 230VAC 50Hz mains power source. It will also be understood that the actual voltage supplied from the AC mains power source may vary about +/- 10%, which means that the actual voltage received by the absorption refrigerator 10 can be expected to vary from a low of 207VAC to a high of about 253VAC.

The absorption cooling unit 12 may include a power supply 20, an electronic controller 22 (e.g., microprocessor with on-board and/or off- board memory and Input/Output subsystems), a heater power control electronics subsystem 24, a high output heater 26, and otherwise conventional cooling components 28 (e.g., generator, condenser, evaporator, expansion valve, receiver, etc.). Optionally, one of more temperature sensors 30 and 32 may be located within the compartments 16 and 18, respectively, and used to provide feedback to the electronic controller 22 as to real time temperatures within these compartments. Additional description details of an absorption cooling unit are available in U.S. Patent No. 9,250,011 to Berkhout et al., assigned to the assignee of the present disclosure, and hereby incorporated by reference into the present disclosure.

It will also be appreciated that while the following discussion will reference the single high output heater 26, an easily implemented modification could be the use of two heaters: a supplemental high output heater 26a (e.g., 250W) and a standard or primary heater 26b (e.g., 150W). Thus, the following description is equally applicable to controlling a single heater or two or independent heaters. In this example, the single high output heater 26 comprises a 250 watt heater controlled by a pulse width modulated drive signal which will be discussed further in the following paragraphs.

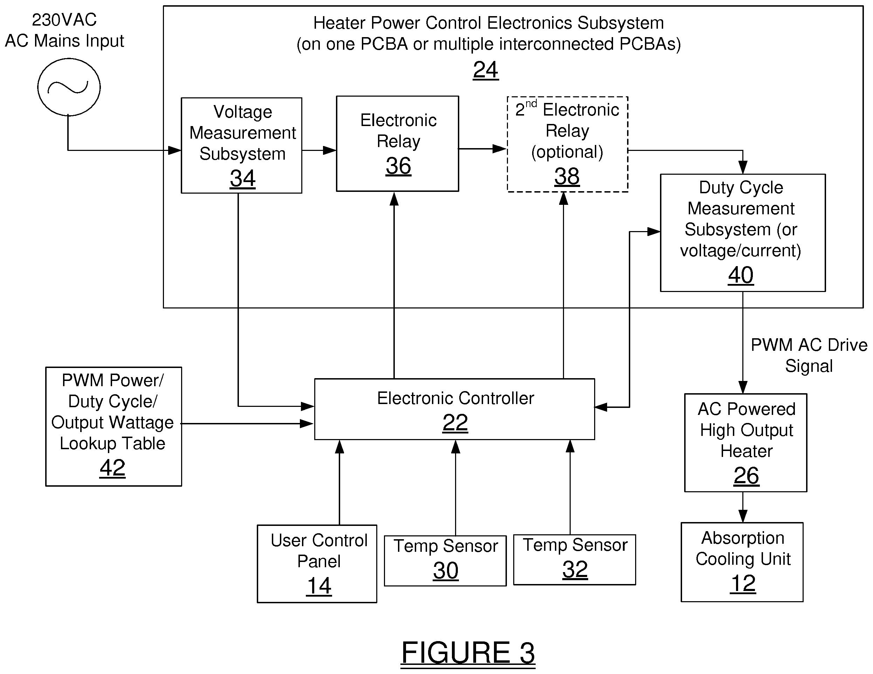

Referring to Figure 3, a more detailed diagram is shown of one embodiment of the heater power control electronics subsystem 24 ("HPCE subsystem 24"). The HPCE subsystem 24, in one example, may be implemented on a single printed circuit board assembly or on multiple interconnected printed circuit board assemblies. It will be appreciated, however, that it would also be possible to integrate the HPCE subsystem 24 in or near an AC heater element (separate and indepedent to a control board which includes the electronic controller 22). Regardless of where the HPCE subsystem 24 is located, the HPCE subsystem 24 may include a voltage measurement subsystem 34, an electronic relay 36, an optional second electronic relay 38 and a duty cycle measurement subsystem 40. Relay 36 can be tripped (i.e. opened) by the electronic controller 22 in the event the duty cycle measurement subsystem 40 indicates that the power control component (triac or MOSFET) is shorted (i.e., operating at a 100% duty cycle) and conducting continuously. Optional second relay may be included, and controlled by the electronic controller 22, as further protection in the event electronic relay 38 malfunctions and becomes shorted.

The voltage measurement subsystem 34 measures the actual input being received from the 230VAC mains input source and provides a signal in accordance therewith to the electronic controller 22. The electronic controller 22 uses this signal along with known information stored in a PWM power/duty cycle/wattage look-up table 42 to determine the appropriate control signals, in real time, to be applied to the duty cycle measurement subsystem 40 to achieve the appropriate power (wattage) output from the high output heater 26 at a given, sensed AC mains voltage.

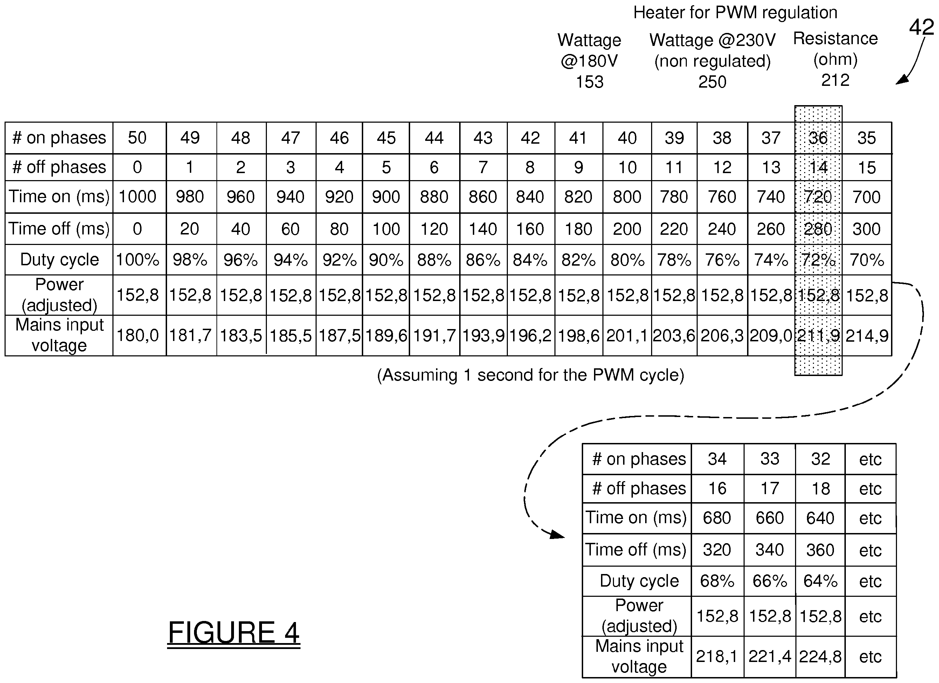

One example of the look-up table 42 is shown in Figure 4. It will be appreciated that with a 50Hz AC mains frequency, in one second there will be 50 periods. Each one of the 50 periods will have an "ON" duration of 20ms. Thus, 50 ON periods per second would translate to an ON time of 1000ms (1 second), and an OFF time of 0 seconds. In the United States, the 60Hz AC mains frequency will provide 60 periods with each period having an ON duration of 16.7ms. For the following discussion it will be assumed that a 50Hz mains frequency is being considered and that the high output heater 26 is a 230VAC, 250W heater that is known to produce a 153W output at a mains input voltage of 180VAC. Thus, with reference to the look-up table 42 in Figure 4, for a detected AC mains input voltage of 180V, 50 periods per second (i.e., 100% duty cycle) would be required to generate a 152.8W output from the high output heater 26. If the AC mains input was detected to be 211.9VAC, then a duty cycle of 72% would be required to produce the desired output of 152.8W from the high output heater 26. The electronic controller 22 can then use the actual measured voltage received from the 230VAC Mains source to determine the exact duty cycle needed for the PWM control signal applied to the high output heater 26 in order for the heater to produce a desired power output in watts. This eliminates the risk of the power output from the high output heater 26 being reduced when the AC mains voltage drops below the nominal 230VAC rating, and tailors the power output, in real time, so that the output can be maintained.

For an over voltage situation, where the voltage measurement subsystem 34 detects that the nominal 230VAC AC mains source is actually supplying an AC voltage greater than 230VAC, this condition typically will not significantly influence the cooling capacity of the high output heater 26, although the cooling capacity can be expected to be degraded slightly. Over cooling caused by an over voltage condition may be addressed by using the signals from the temperature sensors 30 and/or 32 to signal to the electronic controller 22 when a cutoff temperature (i.e., lower temperature threshold) has been reached, at which time the electronic controller may simply turn off the high output heater 26 until a cut-in temperature (e.g., upper temperature threshold) is reached. These temperatures may typically be set from the user control panel 14 or from a separate thermostat. Generally, however, over voltage conditions are undesirable because they can stress the components of the absorption cooling unit 12, which can decrease the lifespan of the unit's components, as well as introduce inefficiency into the unit's operation. The PWM control feature described herein provides the significant benefit of enabling both under voltage and over voltage conditions to be addressed by controlling the duty cycle of the AC output signal applied to the high output heater 26. For example, an over voltage condition could be addressed by using a very low duty cycle (e.g., less than 20%) while the high output heater 26 is operating.

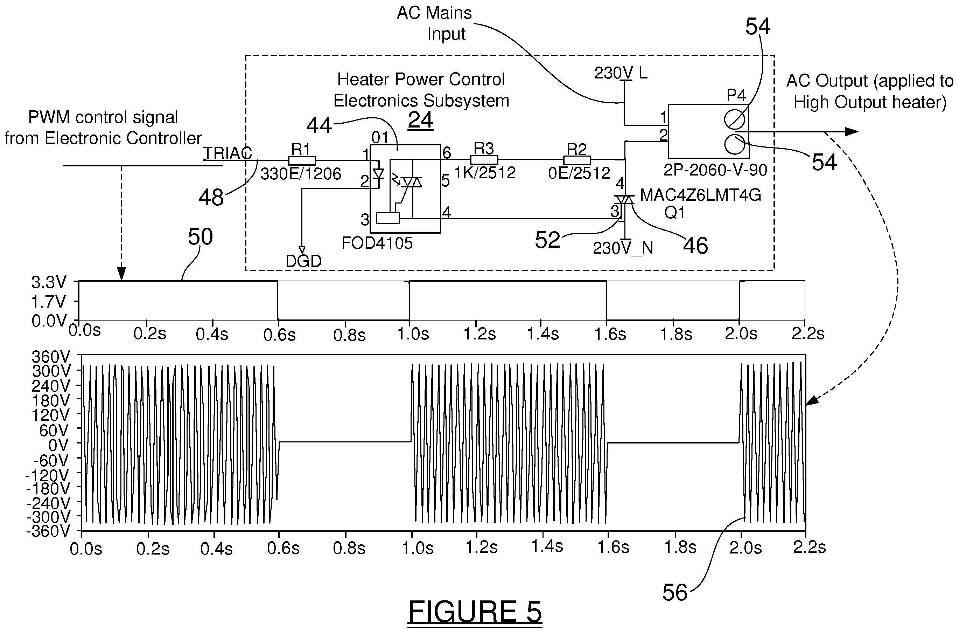

Referring to Figure 5, one example is shown of how to implement a portion of the HPCE subsystem 24 by using an opto-isolator 44 and a triac 46. A gate 48 of the opto-isolator 44 may receive a PWM control signal from the electronic controller 22. An example of the PWM control signal is represented by waveform 50. Waveform 50 in this example illustrates the PWM control signal having a duty cycle of 60%. Each "ON" pulse of the PWM waveform 50 on the gate 48 of the opto-isolator 44 causes a signal to be generated on a gate 52 of the triac 46, thus allow the AC mains input voltage signal to be applied across output 54 to the high output heater 26. The AC signal at output 54 is shown in this example as AC waveform 56. From waveforms 50 and 56 it is evident that an AC output signal is generated at output 54 only during those periods where the PWM control signal is at a logic 1 level (e.g., 3.3v in this example). Resistor R1 enables correct operation of the LED within the opto-isolator 44. The exact value of the resistance of resistor R1 depends on the requirements of the specific opto-isolator that is being used. Resistors R2 and R3, as well as capacitor C1, may be used for EMC reasons, and more particularly to prevent the triac 46 from unintendedly opening or closing due to voltage transients. The exact values and part numbers of these components are dependent on the transients to be expected, the relevant EMC standards and/or test results, as well as the specific values for other components in the HPCE subsystem 24.

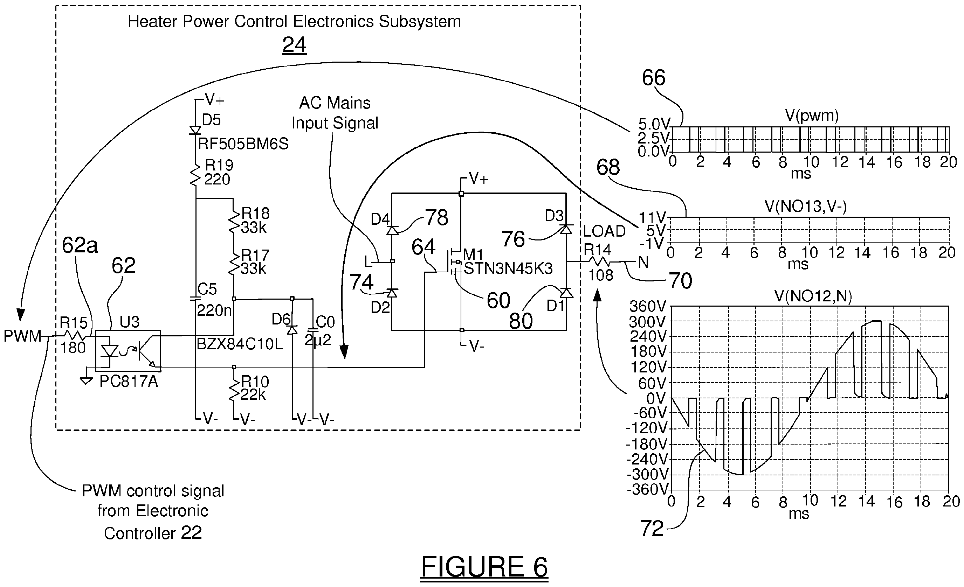

Referring to Figure 6, an example is shown how the HPCE subsystem 24 can be implemented using a MOSFET 60. An opto-isolator component 62 has a gate 62a which receives the PWM control signal from the electronic controller 22. The PWM control signal on the gate 62a is used by the opto-isolator component 62 to control an output signal which is applied to the gate 64 of the MOSFET 60. The output signal applied to the gate 64 of the MOSFET 60 controls on/off operation of the MOSFET 60 in accordance with the duty cycle of the PWM control signal, which is illustrated in this example by waveform 66. The voltage signal applied to the gate 64 of the MOSFET 60 is represented by waveform 68. An AC output signal for the high output heater 26 is generated at output 70 when the MOSFET 60 is turned on. The AC output signal in this example is indicated by waveform 72. Diodes 74 and 76 are able to conduct on the negative half cycle of the AC mains input signal when the MOSFET 64 is turned on, and diodes 78 and 80 are able to conduct on the positive half cycle when the MOSFET 64 is turned on. Components D5, R19, R18, R17, C5, D6, R10 and C6 and R10 and R15 may be selected and used to further ensure (and maintain) the correct voltage at the gate of the MOSFET 60 to keep the MOSFET conducting for the positive and negative part of the 230VAC line voltage, as long as the opto-isolator 62 is activated. The exact values and part numbers of these components may be determined through suitable testing and may vary somewhat based on the values of other components in the HPCE subsystem 24.

From Figure 6 it will be noted that the PWM control signal, indicated by the waveform 66, produces a DC voltage on the gate 64 of the MOSFET 60 (waveform 68) that has the same duty cycle as the PWM control signal. Likewise, the duty cycle of the AC output waveform 72 is in accordance with the duty cycle of the DC voltage waveform 68 on the gate 64 of the MOSFET 60.

While the HPCE subsystem 24 has been described as making use of the look-up table 42, and thus operating in an open loop fashion, it will be appreciated that the HPCE subsystem could also be constructed as a closed-loop system so that it is operable without the need for the look-up table 42. However, it is expected that the requirement for additional hardware components needed to implement a closed-loop system will not prove to provide any significant operating advantages over the herein described open loop control arrangement.

The absorption refrigerator 10 of the present disclosure thus is able to use a PWM control methodology to precisely control the power delivered to a high output heater for an absorption cooling unit of the absorption refrigerator. The system and method of the present disclosure provides the added advantage of being able to address both under voltage and over voltage conditions affecting the AC mains supply being used to power the absorption refrigerator. This produces more accurate temperature control and can also prolong the life of the high output heater element and the electronics components used in the absorption refrigerator. The various embodiments enable the PWM control methodology to be incorporated into an absorption refrigerator with a limited amount of additional cost and complexity.

## Claims

1. An absorption refrigerator (10) having an alternating current (AC) powered heater (26) for providing heat to an absorption cooling unit (12), **characterized by**:
a heater power control electronics subsystem (24) including a voltage measurement subsystem (34), the voltage measurement subsystem (34) configured to measure a magnitude of an AC mains voltage being used to power the absorption refrigerator (10), and to detect when the AC mains voltage varies from a nominal voltage rating; and
an electronic controller (22) in communication with the heater power control electronics subsystem (24), and configured to use a measured value of the AC mains voltage to determine a pulse width modulated (PWM) duty cycle value needed for powering the heater (26) when the AC mains voltage varies from the nominal voltage rating, and to provide a PWM AC drive signal to the heater (22) having a power level that takes into account the variation from the nominal mains voltage.

2. The absorption refrigerator of claim 1, further comprising a look-up table (42) for use by the electronic controller (22) to determine a duty cycle value required, based on the measured magnitude of the AC mains voltage, in generating the PWM AC drive signal.

3. The absorption refrigerator of claim 1, further comprising a triac (46) for controlling a flow of current to the heater (26), the triac being controlled by the electronic controller (22).

4. The absorption refrigerator of claim 1, further comprising a MOSFET (60) for controlling a flow of current to the heater (26), the MOSFET being controlled by the electronic controller (22).

5. The absorption refrigerator of claims 3 or 4, further comprising an electronic relay (36) controlled by the electronic controller (22) for interrupting power to the heater (26) in the event at least one of the MOSFET (60) or the triac (46) is detected as being shorted.

6. The absorption refrigerator of claim 5, further comprising an additional measurement system (40) for measuring an output signal being applied to the heater (26), and providing a signal indicative of the output signal to the electronic controller (22), which the electronic controller uses to determine if a short circuit condition has developed which will damage the heater (26).

7. The absorption refrigerator of claim 5, further comprising a temperature sensor (30 or 32) located in a compartment (16 or 18) of the absorption refrigerator, for providing a signal indicative of a temperature of the compartment to the electronic controller (22).

8. The absorption refrigerator of claim 5, further comprising an additional electronic relay (38) controlled by the electronic controller (22) for interrupting the PWM AC drive signal applied to the heater (26).

9. A method for controlling power provided to an alternating current (AC) powered heater (26) of an absorption cooling unit (12) of an absorption refrigerator (10), where the absorption refrigerator is being powered by an AC mains power source providing an actual AC voltage output which varies from a nominal AC voltage of the AC mains power source, **characterized by**:
measuring the actual voltage output of the AC mains power source;
determining a duty cycle for a pulse width modulated (PWM) AC drive signal needed to be applied to the heater (26) to provide a predetermined power output to the heater (26) that takes into account a variation of the actual AC voltage output from the nominal AC voltage of the AC mains power source; and
using a controller (22) to control a heater power control electronics subsystem (24) in accordance with the determined duty cycle, to generate the PWM AC drive signal to the heater (26).

10. The method of claim 9, further comprising using a look-up table (42) accessible by the electronic controller (22) to determine the needed PWM duty cycle to be used in generating the PWM AC drive signal.

11. The method of claim 9, further comprising using a voltage measurement subsystem (34) to measure the actual AC voltage from the AC mains source, and providing a signal in relation thereto to the electronic controller (22).

12. The method of claim 9, further comprising using an electronic relay (36) to interrupt the PWM AC drive signal if it is determined that a short circuit condition exists that could damage the heater (26).

13. The method of claim 12, further comprising using the electronic controller (22) to control the electronic relay (36).

14. The method of claim 13, further comprising using a measurement subsystem (40) to measure at least one of a duty cycle, a voltage or a current being used to generate the PWM AC drive signal, to determine if the short circuit condition exists, and providing a signal indicating the short circuit condition to the electronic controller (22)

15. The method of claim 9, further comprising using at least one of a MOSFET (60) or a triac (46) as a power switching component to help control generation of the PWM AC drive signal to the heater (26).

## Patentansprüche

1. Absorptionskältemaschine (10), die eine mit Wechselstrom (AC) betriebene Heizvorrichtung (26) aufweist, um eine Absorptionskühleinheit (12) mit Wärme zu versorgen, **gekennzeichnet durch**:
ein zum Steuern der Heizleistung bestimmtes Elektronikuntersystem (24), das ein Spannungsmessuntersystem (34) umfasst, wobei das Spannungsmessuntersystem (34) dazu ausgelegt ist, eine Größe einer Netzwechselspannung zu messen, die zur Leistungsversorgung der Absorptionskältemaschine (10) verwendet wird, und zu erkennen, wenn die Netzwechselspannung von einer Nennbemessungsspannung abweicht, und
eine in Verbindung mit dem zum Steuern der Heizleistung bestimmten Elektronikuntersystem (24) stehende elektronische Steuerung (22), die dazu ausgelegt ist, einen Messwert der Netzwechselspannung zu verwenden, um einen pulsbreitenmodulierten (PWM) Tastgrad zu ermitteln, der zur Leistungsversorgung der Heizvorrichtung (26) erforderlich ist, wenn die Netzwechselspannung von der Nennbemessungsspannung abweicht, und der Heizvorrichtung (22) ein PWM-AC-Antriebssignal zu liefern, das eine Leistungshöhe aufweist, die die Abweichung von der Netznennspannung berücksichtigt.

2. Absorptionskältemaschine nach Anspruch 1, ferner umfassend eine Nachschlagetabelle (42), die von der elektronischen Steuerung (22) verwendet wird, um einen Tastgrad zu ermitteln, der auf Grundlage der gemessenen Größe der Netzwechselspannung zum Erzeugen des PWM-AC-Antriebssignals erforderlich ist.

3. Absorptionskältemaschine nach Anspruch 1, ferner umfassend einen Triac (46) zum Steuern eines Stromflusses zu der Heizvorrichtung (26), wobei der Triac von der elektronischen Steuerung (22) gesteuert wird.

4. Absorptionskältemaschine nach Anspruch 1, ferner umfassend einen MOSFET (60) zum Steuern eines Stromflusses zu der Heizvorrichtung (26), wobei der MOSFET von der elektronischen Steuerung (22) gesteuert wird.

5. Absorptionskältemaschine nach Anspruch 3 oder 4, ferner umfassend ein elektronisches Relais (36), das von der elektronischen Steuerung (22) gesteuert wird, um eine Versorgung der Heizvorrichtung (26) mit Energie zu unterbrechen, falls erkannt wird, dass der MOSFET (60) und/oder der Triac (46) kurzgeschlossen ist.

6. Absorptionskältemaschine nach Anspruch 5, ferner umfassend ein zusätzliches Messsystem (40) zum Messen eines Ausgangssignals, das an die Heizvorrichtung (26) angelegt ist, und zum Liefern eines auf das Ausgangssignal hinweisenden Signals an die elektronische Steuerung (22), das die elektronische Steuerung verwendet, um zu ermitteln, ob sich ein Kurzschlusszustand eingestellt hat, der die Heizvorrichtung (26) beschädigen wird.

7. Absorptionskältemaschine nach Anspruch 5, ferner umfassend einen Temperaturfühler (30 oder 32), der in einer Kammer (16 oder 18) der Absorptionskältemaschine festgelegt ist, um ein auf eine Temperatur der Kammer hinweisendes Signal an die elektronische Steuerung (22) zu liefern.

8. Absorptionskältemaschine nach Anspruch 5, ferner umfassend ein zusätzliches elektronisches Relais (38), das von der elektronischen Steuerung (22) gesteuert wird, um das an die Heizvorrichtung (26) angelegte PWM-AC-Antriebssignal zu unterbrechen.

9. Verfahren zum Steuern der Leistung, mit der eine mit Wechselstrom (AC) betriebene Heizvorrichtung (26) einer Absorptionskühleinheit (12) einer Absorptionskältemaschine (10) versorgt wird, wobei die Absorptionskältemaschine von einer Netzwechselspannungsquelle mit Leistung versorgt wird, die eine tatsächliche Wechselspannungsabgabe liefert, die von einer Nennwechselspannung der Netzwechselspannungsquelle abweicht, **gekennzeichnet durch**:
Messen der tatsächlichen Spannungsabgabe der Netzwechselspannungsquelle,
Ermitteln eines Tastgrads für ein pulsbreitenmoduliertes (PWM) AC-Antriebssignal, das an die Heizvorrichtung (26) angelegt sein muss, um die Heizvorrichtung (26) mit einer vorgegebenen Leistungsabgabe zu versorgen, die eine Abweichung der tatsächlichen Wechselspannungsabgabe von der Nennwechselspannung der Netzwechselspannungsquelle berücksichtigt, und
Verwenden einer Steuerung (22), um ein zum Steuern der Heizleistung bestimmtes Elektronikuntersystem (24) in Übereinstimmung mit dem ermittelten Tastgrad zu steuern, um ein PWM-AC-Antriebssignal an die Heizvorrichtung (26) zu erzeugen.

10. Verfahren nach Anspruch 9, ferner umfassend das Verwenden einer Nachschlagetabelle (42), die für die elektronische Steuerung (22) zugänglich ist, um den erforderlichen PWM- Tastgrad, der zum Erzeugen des PWM-AC-Antriebssignals zu verwenden ist, zu ermitteln.

11. Verfahren nach Anspruch 9, ferner umfassend das Verwenden eines Spannungsmessuntersystems (34), um die von der Netzwechselspannungsquelle kommende tatsächliche Wechselspannung zu messen, und das Liefern eines sich darauf beziehenden Signals an die elektronische Steuerung (22).

12. Verfahren nach Anspruch 9, ferner umfassend das Verwenden eines elektronischen Relais (36), um das PWM-AC-Antriebssignal zu unterbrechen, falls ermittelt wird, dass ein Kurzschlusszustand vorliegt, der die Heizvorrichtung (26) beschädigen könnte.

13. Verfahren nach Anspruch 12, ferner umfassend das Verwenden der elektronischen Steuerung (22), um das elektronische Relais (36) zu steuern.

14. Verfahren nach Anspruch 13, ferner umfassend das Verwenden eines Messuntersystems (40), um einen Tastgrad, eine Spannung und/oder einen Strom zum Erzeugen des PWM-AC-Antriebssignals zu messen, um zu ermitteln, ob der Kurzschlusszustand vorliegt, und das Liefern eines auf den Kurzschlusszustand hinweisenden Signals an die elektronische Steuerung (22).

15. Verfahren nach Anspruch 9, ferner umfassend das Verwenden eines MOSFET (60) und/oder eines Triac (46) als Leistungsschaltkomponente, um beim Steuern der Erzeugung des PWM-AC-Antriebssignals an die Heizvorrichtung (26) behilflich zu sein.

## Revendications

1. Réfrigérateur à absorption (10) ayant un élément chauffant (26) alimenté par un courant alternatif (CA) pour fournir de la chaleur à un module de refroidissement à absorption (12), **caractérisé par** :
un sous-système à électronique de commande de puissance d'élément chauffant (24) incluant un sous-système de mesure de tension (34), le sous-système de mesure de tension (34) étant configuré pour mesurer une amplitude d'une tension secteur CA qui est utilisée pour alimenter le réfrigérateur à absorption (10) et pour détecter quand la tension secteur CA varie d'une tension nominale ; et
un contrôleur électronique (22) en communication avec le sous-système à électronique de commande de puissance d'élément chauffant (24) et configuré pour utiliser une valeur mesurée de la tension secteur CA pour déterminer une valeur de cycle de service à modulation d'impulsions en durée (PWM) nécessaire pour alimenter l'élément chauffant (26) lorsque la tension secteur CA varie de la tension nominale, et pour fournir un signal d'excitation CA PWM à l'élément chauffant (22) ayant un niveau de puissance qui tient compte de la variation de la tension nominale.

2. Réfrigérateur à absorption selon la revendication 1, comprenant en outre une table de consultation (42) destinée à être utilisée par le contrôleur électronique (22) pour déterminer une valeur de cycle de service requise en fonction de l'amplitude mesurée de la tension secteur CA dans la génération du signal d'excitation CA PWM.

3. Réfrigérateur à absorption selon la revendication 1, comprenant en outre un triac (46) pour commander un flux de courant vers l'élément chauffant (26), le triac étant commandé par le contrôleur électronique (22).

4. Réfrigérateur à absorption selon la revendication 1, comprenant en outre un transistor à effet de champ à semi-conducteur à oxyde métallique MOSFET (60) pour commander un flux de courant vers l'élément chauffant (26), le MOSFET étant commandé par le contrôleur électronique (22).

5. Réfrigérateur à absorption selon la revendication 3 ou 4, comprenant en outre un relais électronique (36) commandé par le contrôleur électronique (22) pour interrompre la puissance vers l'élément chauffant (26) au cas où au moins un du MOSFET (60) ou du triac (46) est détecté comme étant court-circuité.

6. Réfrigérateur à absorption selon la revendication 5, comprenant en outre un système de mesure supplémentaire (40) pour mesurer un signal de sortie qui est appliqué à l'élément chauffant (26) et fournir un signal indicateur du signal de sortie au contrôleur électronique (22) que le contrôleur électronique utilise pour déterminer si une condition de court-circuit s'est développée, laquelle endommagera l'élément chauffant (26).

7. Réfrigérateur à absorption selon la revendication 5, comprenant en outre un capteur de température (30 ou 32) situé dans un compartiment (16 ou 18) du réfrigérateur à absorption pour fournir un signal indicateur d'une température du compartiment au contrôleur électronique (22).

8. Réfrigérateur à absorption selon la revendication 5, comprenant en outre un relais électronique supplémentaire (38) commandé par le contrôleur électronique (22) pour interrompre le signal d'excitation CA PWM appliqué à l'élément chauffant (26).

9. Procédé de commande de la puissance fournie à un élément chauffant (26) alimenté par un courant alternatif (CA) d'un module de refroidissement à absorption (12) d'un réfrigérateur à absorption (10), où le réfrigérateur à absorption est alimenté par une source de puissance secteur CA fournissant une sortie de tension CA réelle qui varie d'une tension CA nominale de la source de puissance secteur CA, **caractérisé par** :
mesurer la sortie de tension réelle de la source de puissance secteur CA ;
déterminer un cycle de service pour un signal d'excitation CA à modulation d'impulsions en durée (PWM) nécessaire pour être appliqué à l'élément chauffant (26) pour fournir une sortie de puissance prédéterminée à l'élément chauffant (26) qui tient compte d'une variation de la sortie de tension CA réelle de la tension CA nominale de la source de puissance secteur CA ; et
utiliser un contrôleur (22) pour commander un sous-système à électronique de commande de puissance d'élément chauffant (24) conformément au cycle de service déterminé pour générer le signal d'excitation CA PWM vers l'élément chauffant (26).

10. Procédé selon la revendication 9, comprenant en outre utiliser une table de consultation (42) accessible par le contrôleur électronique (22) pour déterminer le cycle de service PWM nécessaire devant être utilisé dans la génération du signal d'excitation CA PWM.

11. Procédé selon la revendication 9, comprenant en outre utiliser un sous-système de mesure de tension (34) pour mesurer la tension CA réelle provenant de la source secteur CA et fournir un signal en relation avec celle-ci au contrôleur électronique (22).

12. Procédé selon la revendication 9, comprenant en outre utiliser un relais électronique (36) pour interrompre le signal d'excitation CA PWM s'il est déterminé qu'une condition de court-circuit existe qui pourrait endommager l'élément chauffant (26).

13. Procédé selon la revendication 12, comprenant en outre utiliser le contrôleur électronique (22) pour commander le relais électronique (36).

14. Procédé selon la revendication 13, comprenant en outre utiliser un sous-système de mesure (40) pour mesurer au moins un élément parmi un cycle de service, une tension ou un courant qui est utilisé pour générer le signal d'excitation CA PWM, pour déterminer si la condition de court-circuit existe, et fournir un signal indiquant la condition de court-circuit au contrôleur électronique (22).

15. Procédé selon la revendication 9, comprenant en outre utiliser au moins un d'un MOSFET (60) ou d'un triac (46) en tant que composant de commutation de puissance pour aider à commander la génération du signal d'excitation CA PWM vers l'élément chauffant (26).
